# EUROPEAN PATENT SPECIFICATION

(11) **EP 4 037 060 B1**
(45) Date of publication and mention of the grant of the patent: **18.09.2024**
(21) Application number: 20867174.3
(22) Date of filing: 06.07.2020
(51) Int. Cl.: H01M 10/46, H02J 7/00, H01M 50/249

(54) **CHARGER FOR PORTABLE BATTERY**
LADEGERÄT FÜR TRAGBARE BATTERIE
CHARGEUR POUR BATTERIE PORTABLE

(30) Priority: 27.09.2019 JP 2019177752
(43) Date of publication of application: 03.08.2022
(73) Proprietor: HONDA MOTOR CO., LTD., Minato-ku Tokyo 107-8556 (JP)
(72) Inventor: TAMAKI, Kenji, Tokyo 107-8556 (JP)
(74) Representative: Kiwit, Benedikt
(86) International application number: PCT/JP2020/026334
(87) International publication number: WO 2021/059654

(56) References cited:
- WO-A1-2017/022342
- JP-A- 2006 221 989
- JP-A- 2007 048 721
- JP-A- 2018 133 959
- JP-A- 2019 164 976
- US-A1- 2019 232 804

## Description

### TECHNICAL FIELD

The present invention relates to a charger for a portable battery.

### BACKGROUND ART

In the related art, chargers for a battery are known. For example, Japanese Unexamined Patent Application, First Publication No. 2014-138432 discloses a charger in which a battery is horizontally placed. The charger includes a wall portion which covers a terminal of the battery. Documents US 2019/232804 A1, JP 2019 164976 A and WO 22017/022342 A1 disclose further examples of battery chargers.

### RELATED ART DOCUMENT

### PATENT DOCUMENT

Patent Document 1: Japanese Unexamined Patent Application, First Publication No. 2014-138432

### SUMMARY

### PROBLEMS TO BE SOLVED BY THE INVENTION

However, there is room for improvement in smoothly placing a battery in a charger.

Hence, an object of the present invention is to allow a battery to be smoothly placed in a charger in a charger for a portable battery.

### MEANS FOR SOLVING THE PROBLEM

Regarding means for resolving the foregoing problems, an aspect of the present invention has the following constitutions.

According to an aspect of the present invention, there is provided a charger (1) for a portable battery used in an electric vehicle. The charger (1) for a portable battery includes a tray (2) in which a battery (100) is placed. The tray (2) has a bottom surface portion (10) which is formed in a length direction (V1) of the battery (100) in a state of being placed in the charger (1), and side surface portions (12) which rise from the bottom surface portion (10) in a height direction (V2) of the battery (100) in a state of being placed in the charger (1) and face side surfaces of the battery (100) in a width direction (V3). The charger (1) further includes an upper cover (3) which covers a portion of the bottom surface portion (10) and the side surface portions (12) from above.

The charger (1) further includes a charger terminal (6) which may be disposed below the upper cover (3), and a frame (42) which is disposed between the charger terminal (6) and the upper cover (3) in a vertical direction.

The charger (1) further includes an operation portion (60) which allows the charger terminal (6) to move between a connection position for connection to the battery (100) and a retreat position for retreat from the battery (100). The operation portion (60) is able to turn around a shaft (65) in the width direction (V3) of the charger (1) and is constituted to turn downward around the shaft (65) due to a load from above, and the operation portion (60) at the connection position is in a state of having turned further upward around the shaft (65) than the operation portion (60) at the retreat position.

In the charger (1), a position of an end portion of the upper cover (3) may be set such that the charger terminal (6) does not interfere with a bottom surface (112) of the battery (100) when the battery (100) is inserted between the operation portion (60) at the connection position and the upper cover (3).

In the charger (1), one surface (121) of the battery (100) in the height direction (V2) may have a curved surface shape. An opening edge portion (3a) of the upper cover (3) may have a curved surface shape along the one surface (121) of the battery (100).

### ADVANTAGE OF THE INVENTION

According to the charger for a portable battery of the present invention, the tray has the bottom surface portion which is formed in the length direction of the battery in a state of being placed in the charger, and the side surface portions which rise from the bottom surface portion in the height direction of the battery in a state of being placed in the charger and face the side surfaces of the battery in the width direction. Therefore, the following effect is exhibited.

When the battery is placed in the tray, the battery can be guided along the bottom surface portion and the side surface portions of the tray. Therefore, the battery can be smoothly placed in the charger. Furthermore, the charger further includes the upper cover which covers a portion of the bottom surface portion and the side surface portions from above. Therefore, the following effect is exhibited. Since other portions of the bottom surface portion and the side surface portions are open upward, the battery is easily placed therein from above.

Furthermore, the side surface portions of the tray rise from the bottom surface portion in the height direction of the battery in a state of being placed in the charger. Therefore, the following effect is exhibited. When dimensions of the side surface portions of the tray in the height direction are shorter than dimensions of the bottom surface portion in the length direction, a plurality of chargers are easily disposed in the vertical direction. Moreover, when the battery is shortened in the height direction, a plurality of chargers are easily disposed in the vertical direction in a state in which the batteries are mounted in the chargers.

The charger for a portable battery of the present invention further includes the charger terminal which may be disposed below the upper cover, and the frame which may be disposed between the charger terminal and the upper cover in the vertical direction. Therefore, the following effect is exhibited.

Even when the battery falls onto the upper cover from above, the charger terminal is protected by the upper cover and the frame. Therefore, transfer of an impact to the charger terminal can be suitably curbed.

The charger for a portable battery of the present invention further includes the operation portion which allows the charger terminal to move between the connection position for connection to the battery and the retreat position for retreat from the battery. The operation portion is able to turn around the shaft in the width direction of the charger and is constituted to turn downward around the shaft due to a load from above, and the operation portion at the connection position is in a state of having turned further upward around the shaft than the operation portion at the retreat position. Therefore, the following effect is exhibited.

Even when a load of the battery is applied to the operation portion at the connection position from above, the operation portion turns downward around the shaft due to the load from above and moves to the retreat position. Therefore, interference of the battery in the middle of placement with the charger terminal can be curbed.

According to the charger for a portable battery of the present invention, the position of the end portion of the upper cover may be set such that the charger terminal does not interfere with the bottom surface of the battery when the battery is inserted between the operation portion at the connection position and the upper cover.
Therefore, the following effect is exhibited. When the battery is inserted between the operation portion at the connection position and the upper cover, interference of the bottom surface of the battery with the charger terminal can be curbed.

According to the charger for a portable battery of the present invention, one surface of the battery in the height direction may have a curved surface shape. The opening edge portion of the upper cover may have a curved surface shape along the one surface of the battery. Therefore, the following effect is exhibited.

When the battery is attempted to be placed therein upside down, the battery interferes with the upper cover. Therefore, interference of the battery with the charger terminal can be curbed.

### BRIEF DESCRIPTION OF THE DRAWINGS

Fig. 1 is a perspective view of a charger for a battery in a placed state according to the invention.
Fig. 2 is a front view of the charger for the battery in a placed state according to the invention.
Fig. 3 is a perspective view of the charger according to the invention.
Fig. 4 is a front view of the charger according to the invention.
Fig. 5 is a top view of the charger according to the invention.
Fig. 6 is a view in a state in which a tray and an upper cover in Fig. 5 are detached.
Fig. 7 is a cross-sectional view along VII-VII in Fig. 5.
Fig. 8 is a cross-sectional view along VIII-VIII in Fig. 5.
Fig. 9 is a cross-sectional view along IX-IX in Fig. 5.
Fig. 10 is a cross-sectional view along X-X in Fig. 5.
Fig. 11 is a cross-sectional view along XI-XI in Fig. 5.
Fig. 12 is a cross-sectional view along XII-XII in Fig. 2.
Fig. 13 is an explanatory view of a position of an end portion of the upper cover according to an embodiment.

### DESCRIPTION OF THE EMBODIMENTS

Hereinafter, an embodiment of the present invention will be described with reference to the drawings. In each of the diagrams, the same reference signs are applied to the same constitutions. In the embodiment, as an example of a charger for a portable battery, a charger for a portable battery (mobile battery) used in an electrically-driven motorcycle (saddle-type electric vehicle) will be described. In the embodiment, an installation surface on which a charger (which will hereinafter be simply referred to as "a charger") for a portable battery (which will hereinafter be simply referred to as "a battery") is installed is a flat floor surface (horizontal surface).

### <Battery>

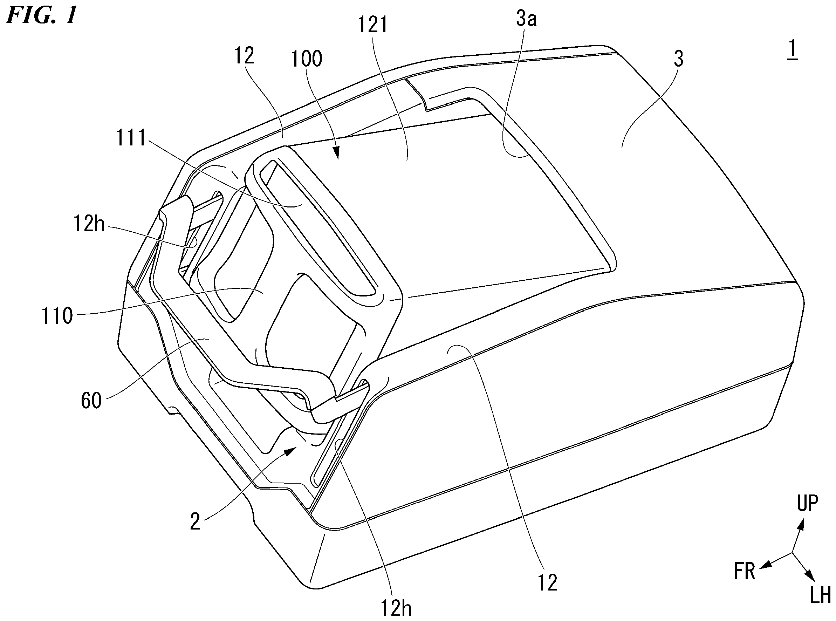

As illustrated in Fig. 1, a battery 100 has a rectangular parallelepiped shape. For example, the battery 100 is a lithium-ion battery.

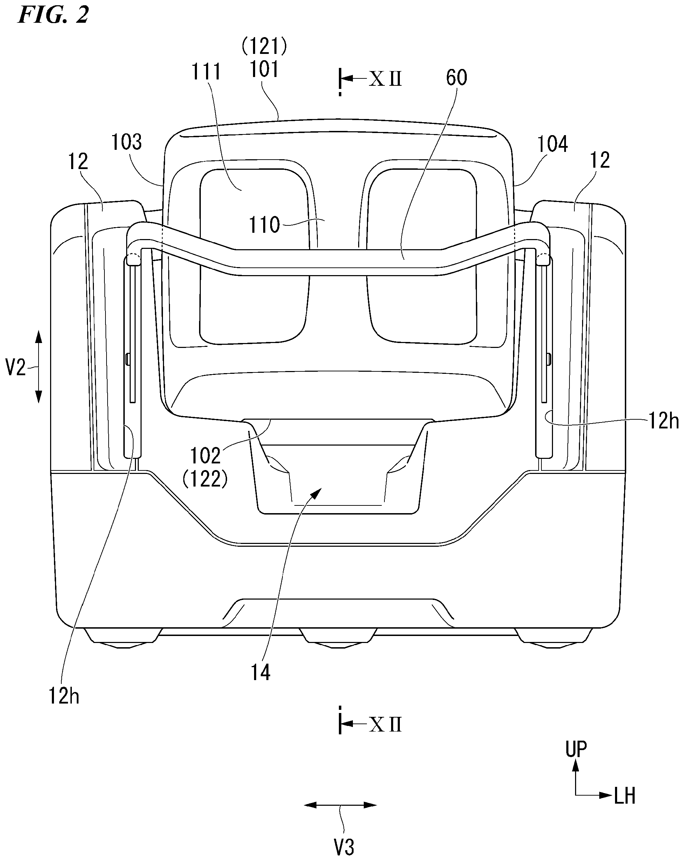

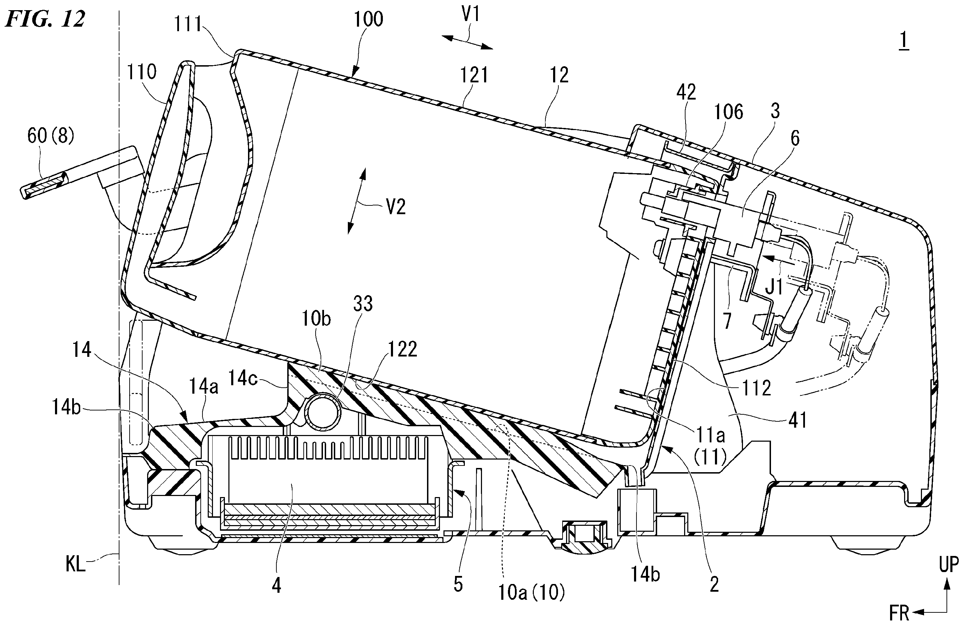

As illustrated in Fig. 2, the battery 100 has a pair of first side 101 and second side 102 above and below extending in a width direction V3, and a pair of third side 103 and fourth side 104 on the left and the right extending in a height direction V2 (refer to Fig. 12). The battery 100 has side surfaces 121 and 122 extending in a length direction V1 (refer to Fig. 12). The first side 101 has a curved line shape projecting toward a side opposite to the second side 102 (upper side in Fig. 2). The side surface 121 on a side of the first side 101 (one surface of the battery 100 in the height direction V2) of side surfaces of the battery 100 has a curved surface shape projecting toward a side opposite to the side surface 122 on a side of the second side 102.

The battery 100 has a grip portion 110 (handle) gripped by a user. The grip portion 110 is provided at an end portion of the battery 100 in the length direction V1 (refer to Fig. 12). The grip portion 110 is provided on a first surface 111 facing one side of the battery 100 in the length direction V1. A terminal 106 of the battery 100 (which will hereinafter be simply referred to as "a battery terminal 106") is provided on a second surface 112 (bottom surface) on a side opposite to the first surface 111 in the length direction V1 of the battery 100 (refer to Fig. 12). The battery terminal 106 is disposed in the vicinity of the side surface 121 (which will hereinafter be referred to as "a first side surface 121") on a side of the first side 101 of the second surface 112 (refer to Fig. 12).

### <Charger>

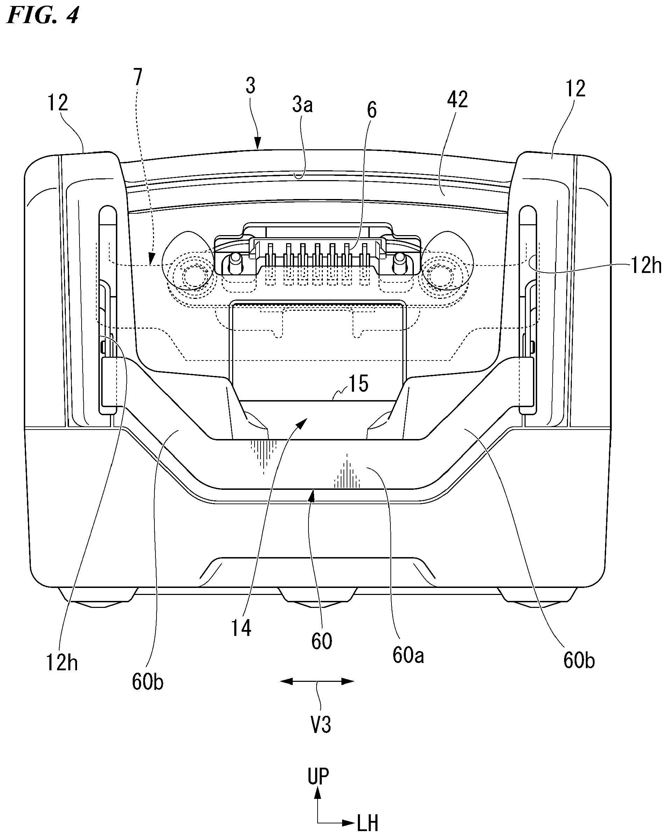

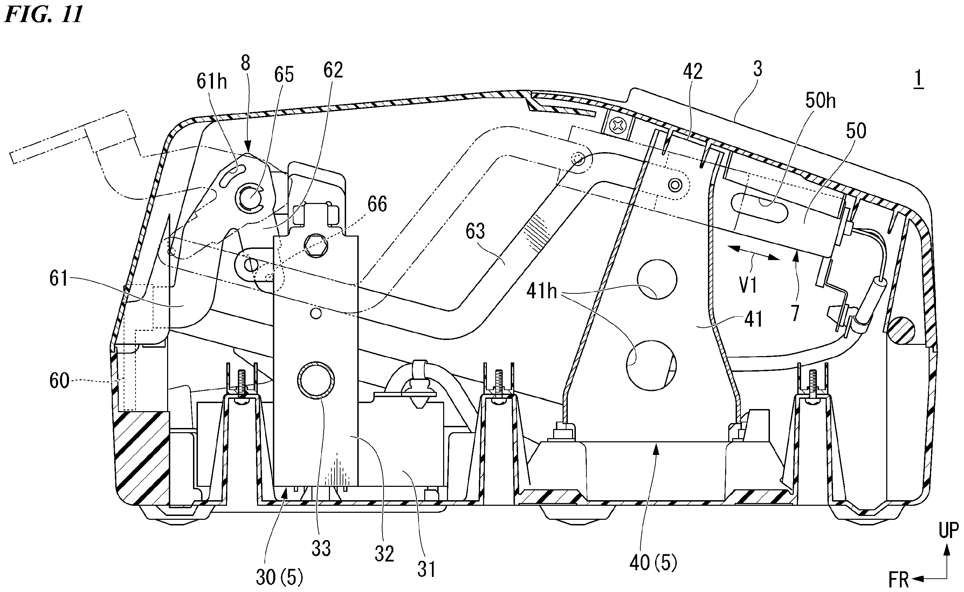

As illustrated in Fig. 1, a charger 1 includes a tray 2 in which the battery 100 is placed, an upper cover 3 which covers a portion of the tray 2 from above, a control device 4 which performs charging control of the battery 100 (refer to Fig. 12), a main body frame 5 which constitutes a skeleton of a main body of the charger 1 (refer to Fig. 11), a terminal 6 of the charger 1 (which will hereinafter be simply referred to as "a charger terminal 6", refer to Fig. 4), a holding member 7 which holds the charger terminal 6 (refer to Fig. 4), and an operation mechanism 8 which moves the charger terminal 6 (refer to Fig. 11). The bottom surface of the charger 1 is formed to be parallel to (horizontally with respect to) the floor surface.

In the following description, a depth direction when the charger 1 is installed on the floor surface (a direction orthogonal to the paper illustrated in Fig. 4) will be referred to as "a forward-rearward direction", a normal direction (vertical direction) of the floor surface will be referred to as "a vertical direction", and a direction orthogonal to each of the forward-rearward direction and the vertical direction will be referred to as "a lateral direction (width direction)". In the diagrams, an arrow FR indicates the forward side, an arrow UP indicates the upward side, and an arrow LH indicates the left side, respectively.

### <Tray>

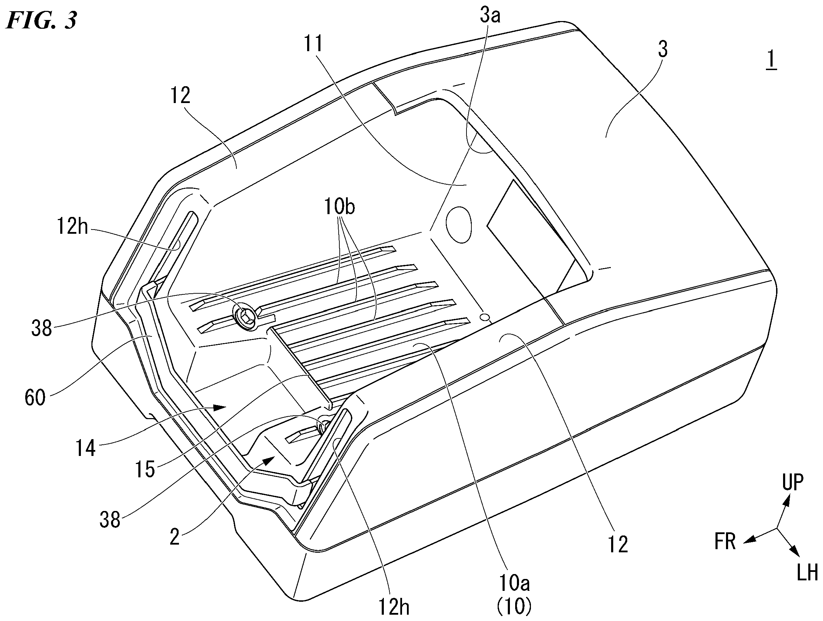

As illustrated in Fig. 3, the tray 2 opens upward and forward such that the battery 100 (refer to Fig. 1) can be placed therein and taken out. The tray 2 includes a bottom surface portion 10 which is formed in the length direction V1 of the battery 100 in a state of being placed in the charger 1, a receiving surface portion 11 which receives a bottom portion of the battery 100, and a pair of left and right side surface portions 12 which face the side surfaces of the battery 100 in the width direction V3. The receiving surface portion 11 and the pair of left and right side surface portions 12 rise from the bottom surface portion 10 in the height direction V2 of the battery 100 in a state of being placed in the charger 1 (refer to Fig. 12). In the diagrams, the reference sign 12h indicates a long hole for restricting movement of a lever 60 (turning of a first link 61 around a first pivot shaft 65).

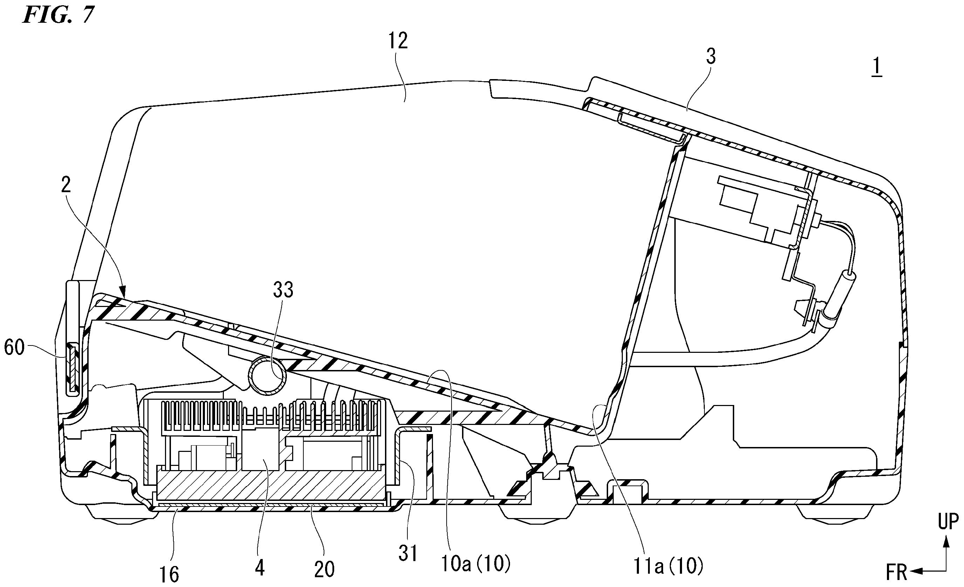

As illustrated in Fig. 7, the bottom surface portion 10 has a first inclined surface 10a which is inclined with respect to the bottom surface of the charger 1. The first inclined surface 10a is a placement surface on which the battery 100 is placed. The first inclined surface 10a is inclined with respect to a horizontal surface. The first inclined surface 10a is formed in the length direction V1 of the battery 100 in a state of being placed in the charger 1. The first inclined surface 10a is a surface facing the side surface 122 (which will hereinafter be referred to as "a second side surface 122") on a side of the second side 102 of the battery 100. The first inclined surface 10a is inclined such that the angle formed between the first inclined surface 10a and the bottom surface of the charger 1 becomes an acute angle smaller than 45°.

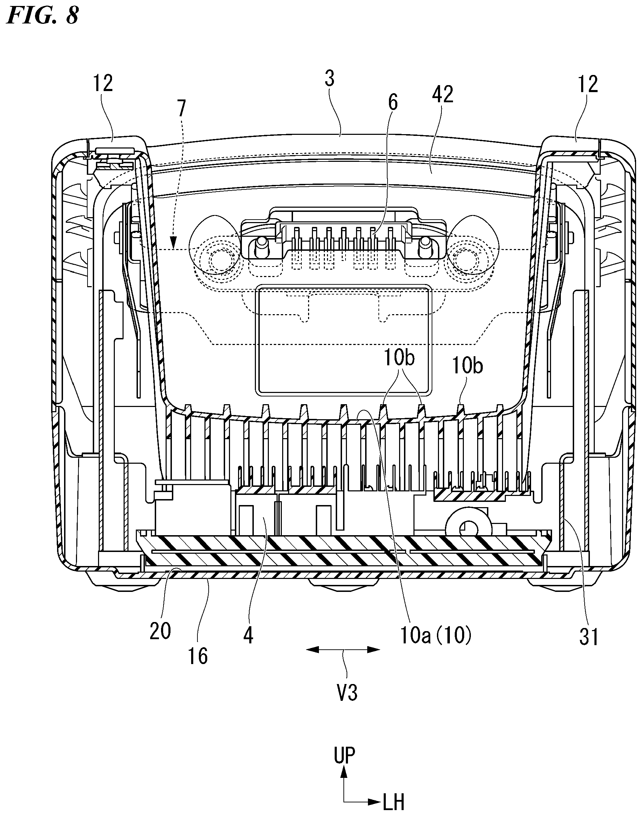

As illustrated in Fig. 8, a central portion on the first inclined surface 10a in the width direction V3 has a curved surface shape projecting downward. The first inclined surface 10a is curved such that a center position in the width direction V3 becomes the lowermost position, and outer end positions in the width direction V3 become the uppermost positions. The first inclined surface 10a in its entirety has an arc shape projecting downward.

Ribs 10b projecting upward are formed on the first inclined surface 10a. The ribs 10b extend in the forward-rearward direction. A plurality of ribs 10b are disposed at intervals in the width direction V3. Sizes of the intervals between two ribs 10b adjacent to each other in the width direction V3 are the same as each other. Upper ends of the plurality of ribs 10b in the vertical direction are positioned at the same positions. In a state in which the battery 100 is placed in the tray 2 (which will hereinafter be referred to as "a placed state"), the upper end of each of the ribs 10b comes into contact with the second side surface 122 of the battery 100.

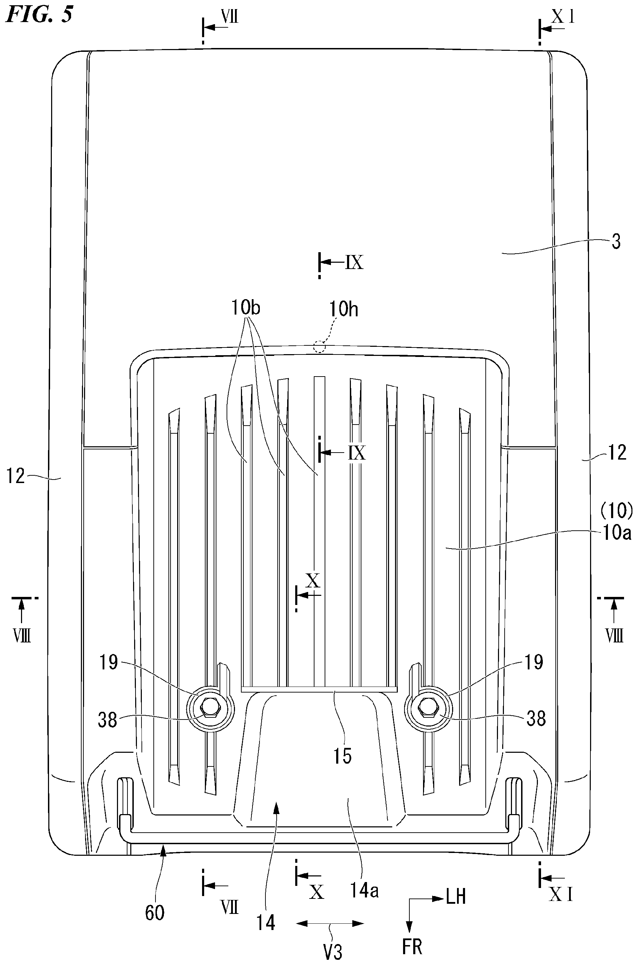

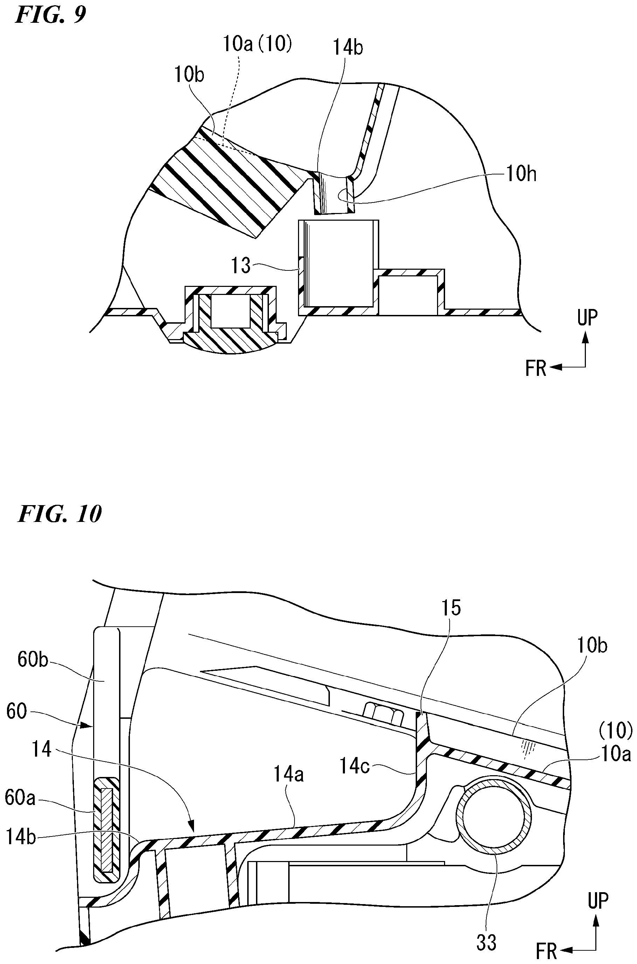

As illustrated in Fig. 9, a drain hole 10h is formed at a lowest end 14b on the first inclined surface 10a. The drain hole 10h is disposed at the center of a rear end portion on the first inclined surface 10a in the width direction V3 (refer to Fig. 5). The drain hole 10h opens at a rear end portion on the first inclined surface 10a in the vertical direction.

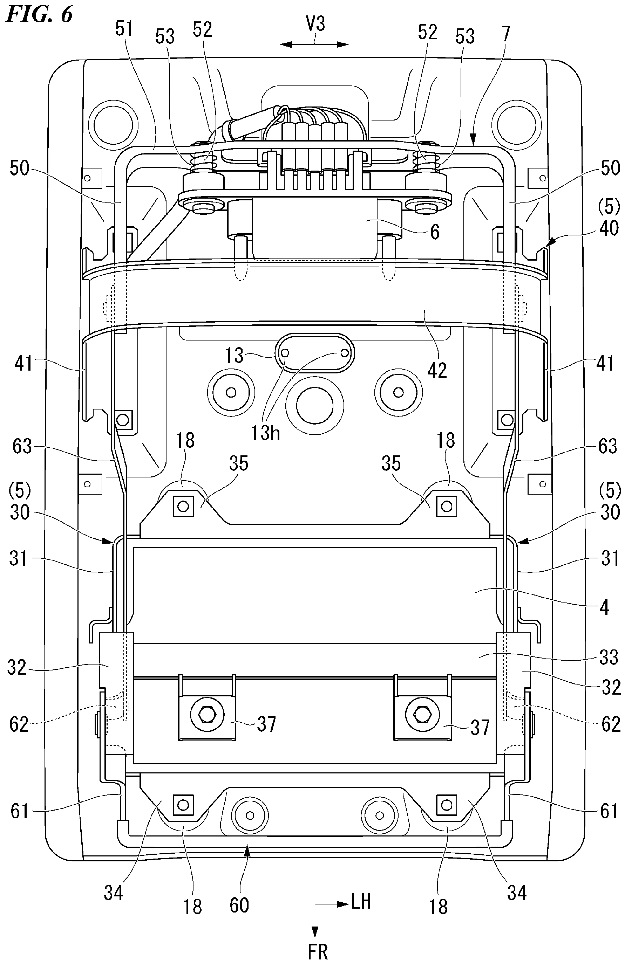

A bottom portion of the charger 1 has an enclosure portion 13 at a part positioned below the drain hole 10h. The enclosure portion 13 has a bottomed tubular shape with an opening larger than the drain hole 10h. Specifically, the enclosure portion 13 has an opening larger than a tubular portion having the drain hole 10h. The enclosure portion 13 has a ring shape extending in the width direction V3 (refer to Fig. 6). As illustrated in Fig. 6, discharge holes 13h are formed in a bottom portion of the enclosure portion 13. A pair of left and right discharge holes 13h are disposed with an interval therebetween in the width direction V3. The pair of left and right discharge holes 13h are disposed at both ends of the enclosure portion 13 in the width direction V3.

As illustrated in Fig. 7, the receiving surface portion 11 has a second inclined surface 1 1a which is inclined with respect to the bottom surface of the charger 1. The second inclined surface 11a rises from the end portion (rear lower end portion) on the first inclined surface 10a in the height direction V2 of the battery 100 in a placed state. The second inclined surface 11a is a part receiving the second surface 112 of the battery 100. The second inclined surface 11a is inclined such that it is orthogonal to the first inclined surface 10a. The second inclined surface 11a is inclined such that the angle formed between the second inclined surface 11a and the bottom surface of the charger 1 becomes an acute angle larger than 45°.

As illustrated in Fig. 12, upper end positions of the side surface portions 12 are positioned below an upper end position of the battery 100 in a placed state. In a side view of Fig. 7, upper end edges of the side surface portions 12 are inclined such that they are positioned downward toward the front side from the upper end positions. In a side view, front end edges of the side surface portions 12 are inclined such that they are positioned forward toward a lower side from front ends at the upper end edges.

As illustrated in Fig. 12, the grip portion 110 of the battery 100 in a placed state is disposed on an upper end side on the first inclined surface 10a. In a side view, the upper ends at the front end edges of the side surface portions 12 (front ends at the upper end edges) are positioned behind a front end position of the grip portion 110 of the battery 100 in a placed state. In a side view, a portion of the grip portion 110 of the battery 100 in a placed state is exposed from the side surface portions 12. In a side view, the front end portion of the battery 100 in a placed state does not protrude outward beyond the tray 2. In the diagrams, the reference sign KL indicates a perpendicular line (imaginary vertical line) passing through the front end portion of the tray 2. The front end portion of the battery 100 in a placed state is positioned on a side inward from the perpendicular line KL (charger 1 side).

The tray 2 has a recess portion 14 (which will hereinafter be referred to as "a placement surface recess portion 14") which is recessed downward beyond the first inclined surface 10a (placement surface) at the end portion on a side of the grip portion 110 of the battery 100 in a placed state. For example, the placement surface recess portion 14 has a size to an extent that a portion of a hand (finger) of a user enters. The placement surface recess portion 14 is disposed at the center of the tray 2 in the width direction V3 (refer to Fig. 4). In a top view, the placement surface recess portion 14 has a trapezoidal external shape having an upper base on the rear side and a lower base longer than the upper base in the width direction V3 on the front side (refer to Fig. 5).

In a cross-sectional view of Fig. 10, a bottom surface 14a of the placement surface recess portion 14 is inclined such that it is positioned downward toward the front side. The lowest end 14b of the placement surface recess portion 14 is positioned above the upper end of the control device 4 (refer to Fig. 12). In the diagrams, the reference sign 14c indicates a rising portion which rises upward toward the first inclined surface 10a from a rear end on the bottom surface 14a of the placement surface recess portion 14.

A wall portion 15 projecting upward beyond the first inclined surface 10a is provided at a boundary portion between the placement surface recess portion 14 and the first inclined surface 10a. The wall portion 15 is a part protruding upward beyond the first inclined surface 10a from an upper end of the rising portion 14c. The upper end edge of the wall portion 15 linearly extends in the width direction V3 (refer to Fig. 4).

The wall portion 15 is connected to a front end of the rib 10b of the plurality of ribs 10b positioned in the vicinity of the center in the width direction V3 (refer to Fig. 5). The position of the upper end of the wall portion 15 in the vertical direction is the same position as the positions of the upper ends of the ribs 10b in the vertical direction. The upper end of the wall portion 15 comes into contact with the second side surface 122 of the battery 100 in a placed state together with each of the ribs 10b.

### <Upper cover>

As illustrated in Fig. 3, the upper cover 3 is provided at an upper rear portion of the charger 1. The upper cover 3 covers a portion of the bottom surface portion 10 and the pair of left and right side surface portions 12 of the tray 2 from above (refer to Fig. 12). As illustrated in Fig. 12, the upper cover 3 covers the charger terminal 6 and the holding member 7 from above. In a side view, an upper edge of the upper cover 3 is inclined such that it is positioned downward toward the rear side. In a front view of Fig. 4, an opening edge portion 3a of the upper cover 3 has a curved surface shape along the first side surface 121 of the battery 100 (refer to Fig. 2).

### <Control device>

As illustrated in Fig. 12, the control device 4 is disposed below the first inclined surface 10a of the tray 2. In a top view of Fig. 6, the control device 4 has a rectangular shape extending in the width direction V3. The control device 4 includes a plurality of control substrates for performing charging control of the battery 100. For example, the control substrates may be disposed such that control circuits for performing charging control of the battery 100 are directed toward the inward side. For example, fins or heat sinks may be provided on outer surfaces of the control substrates.

As illustrated in Fig. 7, the bottom portion of the charger 1 has a recess portion 16 which is recessed downward (which will hereinafter be referred to as "a bottom surface recess portion 16") at a part positioned below the control device 4. When viewed in the vertical direction, the bottom surface recess portion 16 is disposed at a position overlapping the control device 4. When viewed in the vertical direction, the bottom surface recess portion 16 has a rectangular external shape larger than the external shape of the control device 4. A heat conduction member 20 is disposed in the bottom surface recess portion 16 having a higher heat conductivity than the bottom portion of the charger 1. For example, the bottom portion of the charger 1 is made of a resin. For example, the heat conduction member 20 is an aluminum sheet.

### <Main body frame>

As illustrated in Fig. 11, the main body frame 5 includes a front frame 30 which is positioned at a front portion of the charger 1, and a rear frame 40 which is positioned at a rear portion of the charger 1.

When viewed in the vertical direction, the front frame 30 includes a frame body 31 having a rectangular frame shape (refer to Fig. 6), a pair of left and right columnar bodies 32 extending in the vertical direction, and a cross pipe 33 (frame) extending in the width direction V3.

In a top view of Fig. 6, the frame body 31 has a rectangular frame shape larger than the external shape of the control device 4. The control device 4 is accommodated on the inward side of the frame body 31. In the diagrams, the reference sign 34 indicates a pair of left and right front flange portions which protrude forward from an upper front edge of the frame body 31, the reference sign 35 indicates a pair of left and right rear flange portions which protrude rearward from an upper rear edge of the frame body 31, and the reference sign 18 indicates boss portions of the bottom portion of the charger 1 which are disposed at positions respectively overlapping the flanges 34 and 35 in a top view. For example, each of the flange portions 34 and 35 is coupled to each of boss portions 18 using a fastening member such as a bolt.

The columnar bodies 32 are disposed on the outward sides of the frame body 31 in the width direction V3. Lower portions of the columnar bodies 32 are coupled to side portions of the frame body 31 in the width direction V3.

As illustrated in Fig. 7, the cross pipe 33 is disposed on the upper side of the control device 4. The cross pipe 33 extends throughout the entirety of the battery 100 in a placed state in the width direction V3 (refer to Fig. 12). In the width direction V3, the length of the cross pipe 33 is longer than that of the control device 4 (refer to Fig. 6). Left and right end portions of the cross pipe 33 are coupled to upper and lower central portions of the columnar bodies 32 (refer to Fig. 11).

As illustrated in Fig. 12, the cross pipe 33 is disposed between the control device 4 and the first inclined surface 10a in the vertical direction. The cross pipe 33 is disposed on a side closer to the grip portion 110 of the battery 100 in a placed state than the central portion on the first inclined surface 10a in the length direction V1. The cross pipe 33 is disposed behind and in the vicinity of the rising portion 14c of the placement surface recess portion 14.

In a top view of Fig. 6, the cross pipe 33 is disposed at a position overlapping a central portion of the control device 4 in the forward-rearward direction. In the diagrams, the reference sign 37 indicates a pair of left and right brackets which protrude forward from a front portion of the cross pipe 33, and the reference sign 19 (refer to Fig. 5) indicates boss portions of lower portion on the first inclined surface 10a which are disposed at positions respectively overlapping the brackets 37 in a top view. For example, each of the brackets 37 is coupled to each of the boss portions 19 using a fastening member 38 such as a bolt.

As illustrated in Fig. 11, the rear frame 40 is disposed behind the front frame 30. The rear frame 40 is disposed below the upper cover 3. The rear frame 40 includes a pair of left and right side wall portions 41 which extend in the vertical direction, and a width-direction-extending portion 42 which extends in the width direction V3 (refer to Fig. 6). The pair of left and right side wall portions 41 and the width-direction-extending portion 42 are integrally formed using the same members. The pair of left and right side wall portions 41 and the width-direction-extending portion 42 may be integrally formed using different members.

The side wall portions 41 are disposed on the outward sides of the rear portion of the tray 2 (rear portion of the battery 100 in a placed state) in the width direction V3 (refer to Fig. 12). In a side view of Fig. 11, the side wall portions 41 have external shapes of which lengths in the forward-rearward direction become longer toward the lower side. The side wall portions 41 have a pair of upper and lower circular opening portions 41h. Lower end portions of the side wall portions 41 are coupled to the bottom portion of the charger 1 using a fastening member such as a bolt.

The width-direction-extending portion 42 is disposed on the upper side of the rear portion of the tray 2 (rear portion of the battery 100 in a placed state) (refer to Fig. 12). The width-direction-extending portion 42 is disposed between the charger terminal 6 and the upper cover 3 in the vertical direction (refer to Fig. 12). Left and right end portions of the width-direction-extending portion 42 are coupled to upper ends of the side wall portions 41. In a front view of Fig. 4, the width-direction-extending portion 42 has a curved shape along the opening edge portion 3a of the upper cover 3. In a cross-sectional view of Fig. 12, the width-direction-extending portion 42 is inclined downward to the rear along the upper cover 3.

### <Holding member>

As illustrated in Fig. 12, the holding member 7 holds the charger terminal 6 in a connection direction with respect to the battery 100 (arrow J1 direction in the diagram). In a top view of Fig. 6, the holding member 7 has a U-shape opening forward. The holding member 7 includes a pair of left and right side arm portions 50 which extend in the forward-rearward direction, and a support arm portion 51 which supports the charger terminal 6. The pair of left and right side arm portions 50 and support arm portion 51 are integrally formed using the same members. The pair of left and right side arm portions 50 and support arm portion 51 may be integrally formed using different members.

The side arm portions 50 are disposed on the inward sides of the side wall portions 41 of the rear frame 40 in the width direction V3. In a side view of Fig. 11, the side arm portions 50 extend such that they are positioned downward toward the rear side along the inclination of the battery 100 in a placed state. The side arm portions 50 have long holes 50h (guide holes). The long holes 50h extend in a direction in which the side arm portions 50 extend. The side arm portions 50 are supported by a shaft (not illustrated) in the width direction V3 of the charger 1 via the long holes 50h.

As illustrated in Fig. 6, the support arm portion 51 is disposed on the rear side of the charger terminal 6. The support arm portion 51 extends in the width direction V3. Left and right end portions of the support arm portion 51 are coupled to rear ends of the side arm portions 50. In the diagrams, the reference sign 52 indicates a pair of left and right support pins which protrude forward from the support arm portion 51, and the reference sign 53 indicates biasing members (elastic members) such as springs which are respectively provided in the support pins.

At a connection position (refer to the solid line in Fig. 12) where the charger terminal 6 is connected to the battery 100, the charger terminal 6 is biased by the biasing member 53 in the arrow J1 direction in the diagram toward the battery terminal 106. That is, the biasing member 53 biases the charger terminal 6 in the connection direction with respect to the battery 100 at the connection position.

### <Operation mechanism>

As illustrated in Fig. 12, the operation mechanism 8 includes the lever 60 (operation portion) which allows movement between the connection position where the charger terminal 6 is connected to the battery terminal 106 (which will hereinafter be simply referred to as "a connection position", refer to the solid line in Fig. 12) and a retreat position for retreat from the battery terminal 106 (which will hereinafter be referred to as "a retreat position", refer to the two-dot dashed line in Fig. 12).

Here, the connection position means a position where the charger terminal 6 is fitted into the terminal 106 of the battery 100 in a placed state. The retreat position means a position where the charger terminal 6 has separated from the terminal 106 of the battery 100 in a placed state. The operation mechanism 8 moves the charger terminal 6 between the connection position and the retreat position using a link mechanism. As illustrated in Fig. 11, the operation mechanism 8 includes the lever 60 (operation portion); and the first link 61, a second link 62, and a third link 63 constituting the link mechanism.

As illustrated in Fig. 5, the lever 60 is disposed on the outward side of the charger 1 from the placement surface recess portion 14. The lever 60 has a U-shape opening upward at the center of the tray 2 in the width direction V3 (refer to Fig. 4). In a front view of Fig. 4, the lever 60 includes a first extending portion 60a which extends in the width direction V3, and a second extending portion 60b which is inclined and extends such that it is positioned upward toward the outward side in the width direction V3 from left and right end portions of the first extending portion 60a.

As illustrated in Fig. 11, the lever 60 can turn around a shaft in the width direction V3 of the charger 1 (around the first pivot shaft 65). The lever 60 is constituted such that it turns downward around the shaft due to a load from above. The lever 60 is constituted such that it turns upward around the shaft due to a load from below. The lever 60 at the connection position (refer to the two-dot dashed line in Fig. 11) is in a state in which the lever 60 has turned further upward around the shaft than the lever 60 at the retreat position (refer to the dotted line in Fig. 11). A portion of the lever 60 (a portion of the first extending portion 60a) is positioned below the lowest end 14b of the placement surface recess portion 14 at the retreat position (refer to Fig. 10).

As illustrated in Fig. 11, the first link 61 extends in a manner of straddling between the end portion of the lever 60 (second extending portion 60b) in the width direction V3 and the first pivot shaft 65 (a shaft serving as a fulcrum). One end portion of the first link 61 is coupled (fixed) to the end portion of the lever 60 in the width direction V3. The other end portion of the first link 61 (an end portion on a side opposite to the lever 60) can turn around the first pivot shaft 65. The other end portion of the first link 61 has a long hole 61h which restricts turning around the first pivot shaft 65 and has an arc shape in a side view.

The second link 62 extends in a manner of straddling between the first pivot shaft 65 and a second pivot shaft 66 (a shaft serving as an action point). One end portion of the second link 62 is coupled (fixed) to the other end portion of the first link 61. One end portion of the second link 62 can turn around the first pivot shaft 65.

The third link 63 extends in a crank shape in the forward-rearward direction in a manner of straddling between the second pivot shaft 66 and the holding member 7. One end portion of the third link 63 is connected to the other end portion of the second link 62 via the second pivot shaft 66. The other end portion of the third link 63 is coupled (fixed) to the front end portions of the side arm portions 50 of the holding member 7 using a fastening member such as a bolt.

The third link 63 moves in a direction along the inclination of the placement surface of the tray 2 (inclination of the battery 100 in a placed state) (arrow V1 direction in the diagram, a direction in which the long holes of the side arm portions 50 extend) when the lever 60 is moved between the connection position and the retreat position. Although it is not illustrated, at least one of the other end portion of the second link 62 and one end portion of the third link 63 has a part for converting turning around the second pivot shaft 66 into movement in the arrow V1 direction in the diagram (for example, an escape portion such as a long hole).

### <Position of end portion of upper cover>

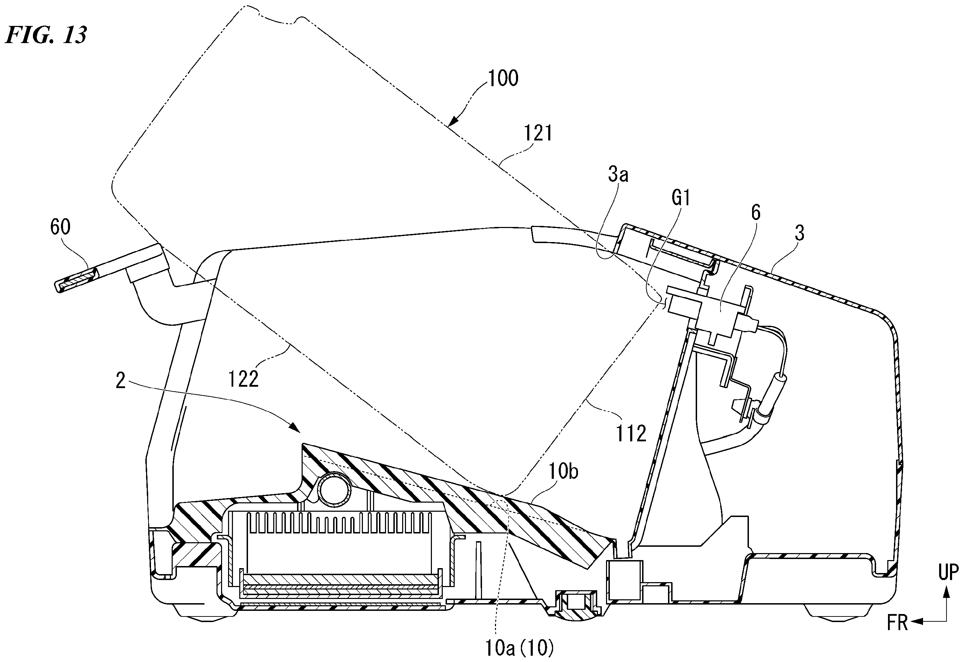

Fig. 13 illustrates an example of a case in which the battery 100 is inserted between the lever 60 at the connection position and the upper cover 3. In the example of Fig. 13, a portion on the second side surface 122 of the battery 100 comes into contact with the upper end of the lever 60 at the connection position. In addition, a lower corner portion of the battery 100 (a corner portion formed by the second side surface 122 and the second surface 112 of the battery 100) comes into contact with the ribs 10b on the first inclined surface 10a of the tray 2. In addition, a portion on the first side surface 121 of the battery 100 comes into contact with the opening edge portion 3a of the upper cover 3. The position of the end portion of the upper cover 3 is set such that the charger terminal 6 does not interfere with the second surface 112 of the battery 100 when the battery 100 is inserted between the lever 60 at the connection position and the upper cover 3. In the diagrams, the reference sign G1 indicates a gap between the second surface 112 of the battery 100 and the charger terminal 6.

### <Operational effects>

As described above, the charger 1 for the portable battery 100 of the foregoing embodiment is used in an electric vehicle. The charger 1 for the portable battery 100 includes the tray 2 in which the battery 100 is placed. The tray 2 has the bottom surface portion 10 which is formed in the length direction V1 of the battery 100 in a placed state, and the side surface portions 12 which rise from the bottom surface portion 10 in the height direction V2 of the battery 100 in a placed state and face the side surfaces of the battery 100 in the width direction V3. The charger 1 further includes the upper cover 3 which covers a portion of the bottom surface portion 10 and the side surface portions 12 from above.

According to this constitution, when the battery 100 is placed in the tray 2, the battery 100 can be guided along the bottom surface portion 10 and the side surface portions 12 of the tray 2. Therefore, the battery 100 can be smoothly placed in the charger 1.

Furthermore, the charger 1 further includes the upper cover 3 which covers a portion of the bottom surface portion 10 and the side surface portions 12 from above. Therefore, the following effect is exhibited. Since other portions of the bottom surface portion 10 and the side surface portions 12 are open upward, the battery 100 is easily placed therein from above.

Furthermore, the side surface portions 12 of the tray 2 rise from the bottom surface portion 10 in the height direction V2 of the battery 100 in a placed state. Therefore, the following effect is exhibited. When dimensions of the side surface portions 12 of the tray 2 in the height direction are shorter than dimensions of the bottom surface portion 10 in the length direction, a plurality of chargers 1 are easily disposed in the vertical direction. Moreover, when the battery 100 is shortened in the height direction V2, a plurality of chargers 1 are easily disposed in the vertical direction in a state in which the batteries 100 are mounted in the chargers 1.

The charger 1 further includes the charger terminal 6 which may be disposed below the upper cover 3, and the width-direction-extending portion 42 which may be disposed between the charger terminal 6 and the upper cover 3 in the vertical direction. Therefore, the following effect is exhibited.

Even when the battery 100 falls onto the upper cover 3 from above, the charger terminal 6 is protected by the upper cover 3 and the width-direction-extending portion 42. Therefore, transfer of an impact to the charger terminal 6 can be suitably curbed.

The charger 1 further includes the lever 60 which allows the charger terminal 6 to move between the connection position for connection to the battery 100 and the retreat position for retreat from the battery 100. The lever 60 is able to turn around the first pivot shaft 65 in the width direction V3 of the charger 1 and is constituted to turn downward around the first pivot shaft 65 due to a load from above, and the lever 60 at the connection position is in a state of having turned further upward around the first pivot shaft 65 than the lever 60 at the retreat position. Therefore, the following effect is exhibited.

Even when a load of the battery 100 is applied to the lever 60 at the connection position from above, the lever 60 turns downward around the first pivot shaft 65 due to the load from above and moves to the retreat position. Therefore, interference of the battery 100 in the middle of placement with the charger terminal 6 can be curbed.

In an embodiment, the position of the end portion of the upper cover 3 is set such that the charger terminal 6 does not interfere with the second surface 112 of the battery 100 when the battery 100 is inserted between the lever 60 at the connection position and the upper cover 3. Therefore, the following effect is exhibited.

When the battery 100 is inserted between the lever 60 at the connection position and the upper cover 3, interference of the second surface 112 of the battery 100 with the charger terminal 6 can be curbed.

In an embodiment, the first side surface 121 of the battery 100 has a curved surface shape. The opening edge portion 3a of the upper cover 3 has a curved surface shape along the first side surface 121 of the battery 100. Therefore, the following effect is exhibited.

When the battery 100 is attempted to be placed therein upside down, the battery 100 interferes with the upper cover 3. Therefore, interference of the battery 100 with the charger terminal 6 can be curbed.

### <Modification example>

An example in which the first inclined surface 10a is inclined with respect to the bottom surface of the charger 1 has been described, but it is not limited thereto. For example, the first inclined surface 10a may be parallel to the bottom surface of the charger 1. For example, the bottom surface of the charger 1 (for example, the bottom surface of a locker or the like for placement of a charger) may be inclined with respect to a horizontal surface, and the bottom surface of the charger 1 and the first inclined surface 10a may be parallel to each other. The first inclined surface 10a need only be inclined with respect to a horizontal surface. That is, the battery 100 need only be disposed such that it is inclined upward.

An example in which the charger 1 includes the charger terminal 6 which is disposed below the upper cover 3, and the width-direction-extending portion 42 which is disposed between the charger terminal 6 and the upper cover 3 in the vertical direction has been described, but it is not limited thereto. For example, the width-direction-extending portion 42 may not be disposed between the charger terminal 6 and the upper cover 3 in the vertical direction. That is, when the battery 100 falls onto the upper cover 3 from above, the charger terminal 6 may be protected by only the upper cover 3.

An example in which the first side surface 121 of the battery 100 has a curved surface shape, and the opening edge portion 3a of the upper cover 3 has a curved surface shape along the first side surface 121 of the battery 100 has been described, but it is not limited thereto. For example, the first side surface 121 of the battery 100 may have a flat surface, and the opening edge portion 3a of the upper cover 3 may have a flat surface along the first side surface 121 of the battery 100.

An example in which the left and right end portions of the width-direction-extending portion 42 are coupled to the upper ends of the side wall portions 41 has been described, but it is not limited thereto. For example, the left and right end portions of the width-direction-extending portion 42 may not be coupled to the upper ends of the side wall portions 41. For example, the width-direction-extending portion 42 may extend along a portion between the left and right side wall portions 41 in the width direction V3. For example, the width-direction-extending portion 42 may extend in a direction intersecting the width direction V3 of the battery 100. For example, the frame disposed between the charger terminal 6 and the upper cover 3 in the vertical direction may be a cross pipe or the like.

An example in which the biasing member 53 biasing the charger terminal 6 in the connection direction with respect to the battery 100 at the connection position is provided has been described, but it is not limited thereto. For example, the charger terminal 6 may not be biased by the biasing member 53 toward the battery terminal 106. That is, the charger 1 may not have the biasing member 53.

An example in which the operation mechanism 8 moves the charger terminal 6 between the connection position and the retreat position using the link mechanism has been described, but it is not limited thereto. For example, the operation mechanism 8 may move the charger terminal 6 between the connection position and the retreat position using a constitution such as a cam mechanism other than the link mechanism.

The present invention is not limited to the foregoing embodiment. For example, the foregoing saddle-type vehicle includes all types of vehicles in which a rider rides the vehicle in a manner of straddling a vehicle body and includes not only motorcycles (including motorized bicycles and scooter-type vehicles) but also vehicles having three wheels (including vehicles having two front wheels and one rear wheel in addition to vehicles having one front wheel and two rear wheels). In addition, the present invention can be applied to not only motorcycles but also vehicles having four wheels such as automobiles.

For example, the charger is not limited to a charger for a mobile battery of a motorcycle and may be applied to a charger for an electrical instrument other than an electric vehicle.

### BRIEF DESCRIPTION OF THE REFERENCE SYMBOLS

1 Charger
2 Tray
3 Upper cover
3a Opening edge portion
6 Charger terminal
10 Bottom surface portion
12 Side surface portion
42 Width-direction-extending portion (frame)
60 Lever (operation portion)
65 Shaft (first pivot shaft)
100 Battery
112 Second surface (bottom surface of battery)
121 First side surface (one surface of battery in height direction)
V1 Length direction of battery
V2 Height direction of battery
V3 Width direction of battery (width direction of charger)

## Claims

1. A charger (1) for a portable battery configured to be used in an electric vehicle comprising:
a tray (2) configured to get a battery (100) placed in it,
wherein the tray (2) has
a bottom surface portion (10) which is formed in a length direction (V1) of the battery (100) in a state of being placed in the charger (1), and
side surface portions (12) which rise from the bottom surface portion (10) in a height direction (V2) of the battery (100) in a state of being placed in the charger (1) and face side surfaces of the battery (100) in a width direction (V3),
wherein the charger (1) further comprises
an upper cover (3) which covers a portion of the bottom surface portion (10) and the side surface portions (12) from above,
**characterized in that** the charger (1) further comprises
an operation portion (60) which is configured to allow a charger terminal (6) to move between a connection position for connection to the battery (100) and a retreat position for retreat from the battery (100),
wherein the operation portion (60) is configured to turn around a shaft (65) in the width direction (V3) of the charger (1) and is constituted to turn downward around the shaft (65) due to a load from above,
wherein the operation portion (60) at the connection position is in a state of turning further upward around the shaft (65) than the operation portion (60) at the retreat position,
wherein the charger (1) further comprises a link (63) which is configured to allow the charger terminal (6) to move between the connection position and the retreat position, and
wherein the link (63) extends between a shaft (66) serving as an action point for turning of the operation portion (60) and the charger terminal (6) and is configured to move in the length direction (V1) of the battery (100) in the state of being placed when the operation portion (60) is moved between the connection position and the retreat position.

2. The charger for a portable battery according to claim 1 further comprising:
the charger terminal (6) which is disposed below the upper cover (3); and
a frame (42) which is disposed between the charger terminal (6) and the upper cover (3) in a vertical direction.

3. The charger for a portable battery according to claim 1 or 2,
wherein a position of an end portion of the upper cover (3) is set such that the charger terminal (6) does not interfere with a bottom surface (112) of the battery (100) when the battery (100) is inserted between the operation portion (60) at the connection position and the upper cover (3).

4. The charger for a portable battery according to any one of claims 1 to 3,
wherein one surface (121) of the battery (100) in the height direction (V2) has a curved surface shape, and
wherein an opening edge portion (3a) of the upper cover (3) has a curved surface shape along the one surface (121) of the battery (100).

## Patentansprüche

1. Ladegerät (1) für eine tragbare Batterie, die ausgestaltet ist, in einem Elektrofahrzeug verwendet zu werden, das aufweist:
einen Schacht (2), der ausgestaltet ist, eine Batterie (100) darin eingesetzt zu erhalten,
wobei der Schacht (2) aufweist
einen Bodenflächenbereich (10), der in einer Längsrichtung (VI) der Batterie (100) in einem im Ladegerät (1) angeordneten Zustand ausgebildet ist, und
Seitenflächenbereiche (12), die vom Bodenflächenbereich (10) in einer Höhenrichtung (V2) der Batterie (100) in einem im Ladegerät (1) angeordneten Zustand ansteigen und Seitenflächen der Batterie (100) in einer Breitenrichtung (V3) zugewandt sind,
wobei das Ladegerät (1) weiterhin aufweist
eine obere Abdeckung (3), die einen Bereich des Bodenflächenbereichs (10) und der Seitenflächenbereiche (12) von oben abdeckt,
**dadurch gekennzeichnet, dass** das Ladegerät (1) weiterhin aufweist
einen Betriebsbereich (60), der ausgestaltet ist, einem Ladegerätanschluss (6) zu ermöglichen, sich zwischen einer Verbindungsposition zum Verbinden mit der Batterie (100) und einer Abstandsposition zum Entfernen aus der Batterie (100) zu bewegen,
wobei der Betriebsbereich (60) ausgestaltet ist, sich um eine Welle (65) in der Breitenrichtung (V3) des Ladegeräts (1) zu drehen und ausgebildet ist, sich um die Welle (65) aufgrund einer Last von oben nach unten zu drehen,
wobei der Betriebsbereich (60) an der Verbindungsposition sich in einem Zustand befindet, in dem er sich weiter um die Welle (65) als der Betriebsbereich (60) an der Abstandsposition nach oben dreht,
wobei das Ladegerät (1) weiterhin ein Verbindungselement (63) aufweist, das ausgestaltet ist, dem Ladegerätanschluss (6) zu ermöglichen, sich zwischen der Verbindungsposition und der Abstandsposition zu bewegen, und
wobei das Verbindungselement (63) zwischen einer Welle (66), die als ein Aktionspunkt zum Drehen des Betriebsbereichs (60) dient, und dem Ladegerätanschluss (6) verläuft, und ausgestaltet ist, sich in der Längsrichtung (VI) der Batterie (100) in dem angeordneten Zustand zu bewegen, wenn der Betriebsbereich (60) zwischen der Verbindungsposition und der Abstandsposition bewegt wird.

2. Ladegerät für eine tragbare Batterie nach Anspruch 1, das weiterhin aufweist:
den Ladegerätanschluss (6), der unter der oberen Abdeckung (3) angeordnet ist; und
einen Rahmen (42), der zwischen dem Ladegerätanschluss (6) und der oberen Abdeckung (3) in einer vertikalen Richtung angeordnet ist.

3. Ladegerät für eine tragbare Batterie nach Anspruch 1 oder 2,
wobei eine Position eines Endbereichs der oberen Abdeckung (3) so festgelegt ist, dass der Ladegerätanschluss (6) nicht mit einer Bodenfläche (112) der Batterie (100) in Konflikt kommt, wenn die Batterie (100) zwischen dem Betriebsbereich (60) an der Verbindungsposition und der oberen Abdeckung (3) eingesetzt ist.

4. Ladegerät für eine tragbare Batterie nach einem der Ansprüche 1 bis 3,
wobei eine Fläche (121) der Batterie 100 in der Höhenrichtung (V2) eine gebogene Flächenform hat, und
wobei ein Öffnungskantenbereich (3a) der oberen Abdeckung (3) eine gebogene Flächenform entlang der einen Fläche (121) der Batterie (100) hat.

## Revendications

1. Chargeur (1) pour une batterie portable configurée pour être utilisée dans un véhicule électrique comprenant :
un support (2) configuré pour qu'une batterie (100) soit placée dans celui-ci,
dans lequel le support (2) comporte
une partie de surface inférieure (10) qui est formée dans une direction de longueur (V1) de la batterie (100) dans un état dans lequel elle est placée dans le chargeur (1), et
des parties de surface latérale (12) qui montent depuis la partie de surface inférieure (10) dans une direction de hauteur (V2) de la batterie (100) dans un état dans lequel elle est placée dans le chargeur (1) et font face à des surfaces latérales de la batterie (100) dans une direction de largeur (V3),
dans lequel le chargeur (1) comprend en outre
un couvercle supérieur (3) qui couvre une partie de la partie de surface inférieure (10) et les parties de surface latérale (12) par-dessus,
**caractérisé en ce que** le chargeur (1) comprend en outre
une partie d'actionnement (60) qui est configurée pour permettre à une borne de chargeur (6) de se déplacer entre une position de raccordement pour se raccorder à la batterie (100) et une position de retrait pour se retirer de la batterie (100),
dans lequel la partie d'actionnement (60) est configurée pour tourner autour d'un arbre (65) dans la direction de largeur (V3) du chargeur (1) et est constituée pour tourner vers le bas autour de l'arbre (65) sous l'effet d'une charge par-dessus,
dans lequel la partie d'actionnement (60) au niveau de la position de raccordement est dans un état dans lequel elle tourne davantage vers le haut autour de l'arbre (65) que la partie d'actionnement (60) à la position de retrait,
dans lequel le chargeur (1) comprend en outre une liaison (63) qui est configurée pour permettre à la borne de chargeur (6) de se déplacer entre la position de raccordement et la position de retrait, et
dans lequel la liaison (63) s'étend entre un arbre (66) servant de point d'action pour la rotation de la partie d'actionnement (60) et de la borne de chargeur (6) et est configurée pour se déplacer dans la direction de longueur (V1) de la batterie (100) dans l'état dans lequel elle est placée lorsque la partie d'actionnement (60) est déplacée entre la position de raccordement et la position de retrait.

2. Chargeur pour une batterie portable selon la revendication 1, comprenant en outre :
la borne de chargeur (6) qui est disposée au-dessous du couvercle supérieur (3) ; et
un cadre (42) qui est disposé entre la borne de chargeur (6) et le couvercle supérieur (3) dans une direction verticale.

3. Chargeur pour une batterie portable selon la revendication 1 ou 2,
dans lequel une position d'une partie d'extrémité du couvercle supérieur (3) est réglée de sorte que la borne de chargeur (6) n'interfère pas avec une surface inférieure (112) de la batterie (100) lorsque la batterie (100) est insérée entre la partie d'actionnement (60) à la position de raccordement et le couvercle supérieur (3).

4. Chargeur pour une batterie portable selon l'une quelconque des revendications 1 à 3,
dans lequel une surface (121) de la batterie (100) dans la direction de hauteur (V2) présente une forme de surface incurvée, et
dans lequel une partie de bord d'ouverture (3a) du couvercle supérieur (3) présente une forme de surface incurvée le long de la surface (121) de la batterie (100).
